(19) **Europäisches Patentamt**

**European Patent Office**

**Office européen des brevets**

(11) Numéro de publication: **0 323 668 B1**

(12) # FASCICULE DE BREVET EUROPEEN

(45) Date de publication de fascicule du brevet: **17.03.93** (51) Int. Cl.⁵: **G10K 11/34**

(21) Numéro de dépôt: **88202940.8**

(22) Date de dépôt: **19.12.88**

(54) **Echographe ultrasonore à cadence d'images améliorée.**

(30) Priorité: **30.12.87 FR 8718387**

(43) Date de publication de la demande:
**12.07.89 Bulletin 89/28**

(45) Mention de la délivrance du brevet:
**17.03.93 Bulletin 93/11**

(84) Etats contractants désignés:
**DE FR GB SE**

(56) Documents cités:
**EP-A- 0 031 510**
**EP-A- 0 119 911**
**FR-A- 2 328 205**
**FR-A- 2 420 334**
**FR-A- 2 508 665**

(73) Titulaire: **LABORATOIRES D'ELECTRONIOUE PHILIPS**
**3, Avenue Descartes**
**F-94450 Limeil-Brévannes(FR)**
(84) Etats contractants désignés:
**FR**

(73) Titulaire: **N.V. Philips' Gloeilampenfabrieken**
**Groenewoudseweg 1**
**NL-5621 BA Eindhoven(NL)**
(84) Etats contractants désignés:
**DE GB SE**

(72) Inventeur: **Pesque, Patrick Société Civile S.P.I.D.**
**209, Rue de l'Université**
**F-75007 Paris(FR)**

(74) Mandataire: **Charpail, François et al**
**Société Civile S.P.I.D. 156, Boulevard Haussmann**
**F-75008 Paris (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

**Description**

La présente invention concerne un échographe ultrasonore comportant au moins une barrette de N transducteurs élémentaires, et comprenant, en outre, un étage d'émission et un étage de réception et de traitement des signaux échographiques renvoyés vers ladite barrette, ledit étage de réception et de traitement disposant de moyens de focalisation simultanée de M faisceaux ultrasonores provenant de M directions différentes.

L'objet de la présente demande trouve une application particulièrement avantageuse dans le domaine du diagnostic médical assisté par échographie ultrasonore.

Les échographes ultrasonores à barrettes (linéaires ou de phase) de transducteurs existant actuellement reposent tous sur le même principe. A savoir, l'émission d'une onde ultrasonore dans une certaine direction, puis l'écoute et l'enregistrement des échos provenant de cette direction. Pour obtenir une image, la direction de tir est séquentiellement modifiée : translatée pour un balayage linéaire ou déviée pour un balayage sectoriel.

L'inconvénient majeur de cette technique est de conduire à une cadence d'images $F_I$ limitée. En effet, si C est la vitesse de propagation des ultrasons dans les tissus, $z_{max}$ la profondeur examinée et $N_a$ le nombre de tirs acoustiques utilisés pour former l'image dans l'application donnée, $F_I$ est donnée par :

$$F_I = C/(2N_a z_{max})$$

avec C = 1500 m/s et $z_{max}$ = 15 cm, on a :

$$F_I = 5000/N_a \text{ images/seconde.}$$

Pour $N_a = 100$, on obtient une cadence d'images de 50 par seconde qui est en général suffisante pour la perception en temps réel de mouvements même rapides (coeur) pour l'imagerie standard. Cependant, elle n'est plus acceptable pour les nouvelles modalités de l'imagerie ultrasonore comme :
- l'image couleur des flux sanguins par échographie Doppler, qui exige environ 10 tirs dans une même direction pour obtenir une ligne d'image couleur afin d'estimer la distribution de vitesse d'écoulement du sang dans cette direction. La cadence d'images tombe à 5 par seconde, ce qui est nettement insuffisant pour l'étude des flux cardiaques par exemple.
- l'imagerie haute-résolution dans laquelle on émet dans une même direction avec plusieurs longueurs focales. La cadence d'images est divisée par le nombre de longueurs focales émises.
- la réduction du bruit aléatoire ("speckle") par la technique de la moyenne des images d'une même zone vue sous des angles différents ("spatial compounding"). La cadence d'images est ici divisée par le nombre d'images différentes de la même zone, c'est à dire 5 environ.
- l'image volumique où l'on réalise une série de coupes. La cadence d'images est divisée par le nombre de plans de coupes.

Un problème technique général à résoudre par tout échographe ultrasonore consiste à obtenir une cadence d'images suffisante tout en satisfaisant aux exigences des nouvelles techniques d'imagerie ultrasonore rappelées ci-dessus.

Une solution à ce problème technique général est fournie par l'objet de la demande de brevet européen EP-A-0 210 624 qui décrit un échographe ultrasonore dont l'étage de réception et de traitement dispose de moyens de focalisation simultanée de M faisceaux ultrasonores, provenant de M directions différentes, lesquels faisceaux sont pris dans un faisceau d'émission relativement large et de profil rectangulaire. Cette technique connue permet effectivement de multiplier par M la cadence d'acquisition de l'information. Pourtant, elle n'est pas exempte d'imperfections puisque l'émission de l'onde ultrasonore étant réalisée à l'aide d'un faisceau large, et donc non focalisé, la résolution globale de l'échographe ultrasonore correspondant se trouve notablement réduite.

Ainsi, le problème technique à résoudre par l'objet de la présente demande est de proposer un échographe ultrasonore, grâce auquel on pourrait augmenter la cadence d'images sans qu'il en résulte pour autant une quelconque limitation de la résolution dudit échographe.

De la demande de brevet français n° 2 420 334 on connaît un échographe ultrasonore comportant les mêmes caractéristiques techniques que celles énoncées au premier paragraphe de la présente description et qui comporte en outre des moyens de focalisation dans l'étage d'émission. Dans cet échographe, des groupes de transducteurs sont excités simultanément de façon à former des faisceaux ultrasonores dans des directions différentes, chaque groupe de transducteurs correspondant à un faisceau et une direction donnés.

2

Il est aussi connu, de la demande de brevet français n° 2 508 665 un procédé d'imagerie ultrasonore dynamique différant de la présente invention par le fait qu'une salve d'ultrasons focalisés sur une zone focale par une loi de retard de phase suit la fin des échos émanant de la zone focale précédente.

La solution au problème technique posé ci-dessus est spécifiée dans la revendication 1, selon laquelle la durée d'émission séquentielle étant très courte se trouve réalisé le compromis d'une augmentation de la cadence d'images par un facteur M sans préjudice sur la résolution de l'échographe puisque les faisceaux d'émission et de réception sont focalisés.

L'échographe selon la présente invention fonctionne selon un principe différent de celui de FR-A-2 420 334 car en effet, c'est l'ensemble des (N) transducteurs qui est excité à raison de N excitations successives, et à M reprises successives différentes de N excitations, pour former M faisceaux, et ceci pendant le temps séparant l'émission, et la réception d'un écho.

La description qui va suivre, en regard des dessins annexés donnés à titre d'exemples non limitatifs, fera bien comprendre en quoi consiste l'invention et comment elle peut être réalisée.

La figure 1 est un schéma de l'étage d'émission de l'échographe ultrasonore selon l'invention.

La figure 2 montre par un schéma en coupe comment, selon l'invention, sont séquentiellement émis 3 faisceaux focalisés dans 3 directions différentes.

La figure 3 est un schéma de l'étage de réception et de traitement de l'échographe ultrasonore selon l'invention.

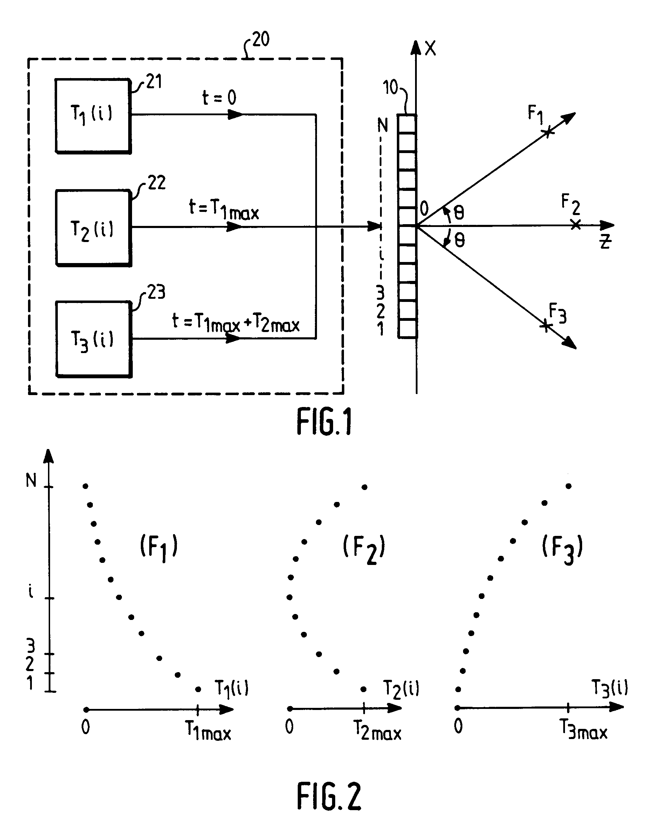

La figure 1 montre schématiquement un échographe ultrasonore comportant une barrette 10 de N transducteurs élémentaires numérotés de i = 1 à N. Cet échographe ultrasonore comporte, en outre, un étage d'émission 20 qui dispose de moyens 21, 22, 23 de focalisation de M = 3 faisceaux ultrasonores émis séquentiellement dans les 3 directions différentes représentées par les points de focalisation F1, F2, F3. Ces moyens de focalisation 21, 22, 23 sont des circuits classiques à lignes à retard qui permettent, selon le principe de la focalisation électronique, de focaliser un faisceau ultrasonore en un point quelconque en jouant sur les instants d'excitation de chaque transducteur élémentaire i. Ainsi, chaque circuit 21, 22, 23 réalise une loi de retard $T_j(i)$ correspondant au point de focalisation $F_j(X_j, Z_j)$ et définie par :

$$T_j(i) = \frac{1}{C} \left( \sqrt{(X_j + (N-1)p/2)^2 + Z_j^2} - \sqrt{(X_j + (N-1)p/2 - (i-1)p)^2 + Z_j^2} \right)$$

où p est le pas de la barrette 10 de transducteurs.

Les trois lois de phase $T_1(i)$, $T_2(i)$, $T_3(i)$ correspondant aux 3 directions F1, F2 et F3 sont représentées sur la figure 2.

La durée d'excitation des N transducteurs élémentaires étant relativement courte (quelques microsecondes), il est possible, sitôt l'émission du premier faisceau vers F1 terminée, de réémettre un deuxième faisceau dans la direction F2 et ainsi de suite autant que nécessaire. La séquence est alors la suivante :

- à t = 0, émission du faisceau focalisé en F1
- à t = T1max, émission du faisceau focalisé en F2
- à t = T1max + T2max, émission du faisceau focalisé en F3.

La séquence complète d'émission dure donc le temps T = T1max + T2max + T3max, soit la somme des 3 retards maximum des 3 lois de retard réalisant lesdits 3 faisceaux focalisés émis. Pendant le temps T, on ne peut pas commencer à recevoir le faisceau provenant des directions F1 et F2. Cependant, cette durée T est assez courte (10 à 20 µs) et ne représente qu'une faible épaisseur (7,5 à 15 mm) de tissus qui ne peut être explorée. En général, cette épaisseur est sans intérêt car elle ne contient que de la peau ou de la graisse. Si toutefois on voulait l'analyser, il suffirait de décaler la surface du transducteur de l'épaisseur correspondante (7,5 à 15 mm) de la peau du patient au moyen d'une "cale" (poche à eau par exemple) transparente aux ultrasons.

Finalement, on voit que la cadence d'images a bien été multipliée par M (ici 3) tout en conservant la focalisation en émission.

La limitation au nombre M est, en principe, liée à la diaphonie qui pourrait survenir entre deux faisceaux consécutifs si l'angle $\theta$ devient trop petit. En pratique on peut montrer qu'un angle $\theta$ de 5° ne produit aucune diaphonie, par exemple à une distance z de 30mm la séparation entre deux faisceaux est de $\Delta x = z \, tg\theta = 3,5mm$, ce qui est nettement supérieur à la résolution latérale obtenue avec des systèmes performants actuels (de l'ordre de 2 longueurs d'onde soit 1mm à 3MHz). On pourrait alors utiliser M = 18 ( = 90/5) faisceaux quasi-simultanés pour une analyse sectorielle de 90°.

3

Toutefois, cette limite reste théorique car le traitement de 18 faisceaux entraînerait un coût élevé en circuits électroniques, et, d'autre part, l'"aveuglement" de l'échographe durerait 60 à 120 $\mu$s, correspondant à une épaisseur perdue de 45 à 90 mm, ce qui est prohibitif.

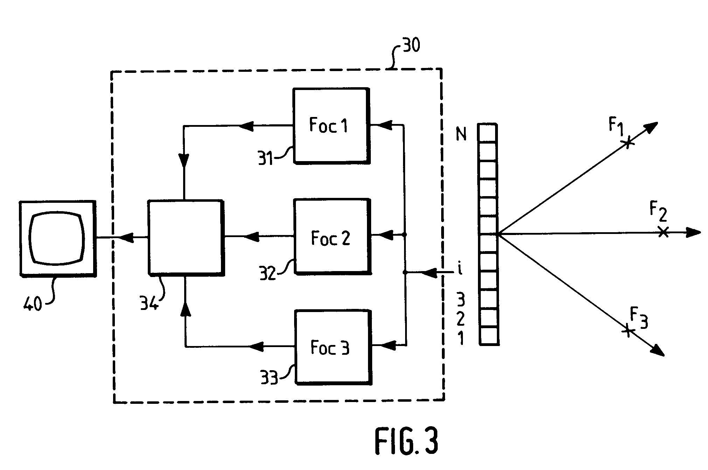

Le circuit 30 de réception et de traitement des signaux échographiques renvoyés vers la barrette 10, représentée à la figure 3, est analogue à celui décrit dans la demande de brevet européen n° 0 210 624. Les N signaux de chaque transducteur élémentaire sont envoyés en parallèle vers M = 3 systèmes de focalisation 31, 32, 33, focalisant en poursuite chacun des signaux i dans l'une des M = 3 directions émises.

Les signaux $s_1(t)$, $s_2(t)$, $s_3(t)$ ainsi formés sont envoyés sur une unité de traitement 34 qui peut être, soit une unité d'extraction d'enveloppes pour l'imagerie d'organes, soit une unité d'estimation de vitesse dans le cas de la visualisation de flux sanguins par échographie Doppler. Enfin, le signal sortant de l'unité de traitement 34 est envoyé sur un dispositif 40 d'affichage.

**Revendications**

1. Echographe ultrasonore comportant au moins une barrette (10) de N transducteurs élémentaires (i), et comprenant, en outre, un étage d'émission (20) et un étage (30) de réception et de traitement des signaux échographiques renvoyés vers ladite barrette (10), ledit étage (30) de réception et de traitement disposant de moyens (31,32,33) de focalisation simultanée de M faisceaux ultrasonores provenant de M directions différentes, ledit étage d'émission (20) disposant de moyens (21, 22, 23) de focalisation de M faisceaux ultrasonores, chacun dans une desdites M directions différentes, caractérisé en ce que chacun des M faisceaux ultrasonores est émis par l'ensemble des N transducteurs élémentaires de la barette et les M faisceaux sont émis de manière successive, la durée totale d'émission des M faisceaux étant définie par la somme des M retards maximum des M lois de retard réalisant lesdits M faisceaux focalisés émis.

**Claims**

1. Ultrasonic echograph, comprising at least one array (10) of N elementary transducers (i), and further comprising an emission stage (20) and a stage (30) for the reception and processing of the echographic signals returned to said array (10), said reception and processing stage (30) comprising means (31, 32, 33) for the simultaneous focusing of M ultrasonic beams originating from M different directions, said emission stage (20) comprising means (21, 22, 23) for the focusing of M ultrasonic beams, each in one of said M different directions, characterized in that each of the M ultrasonic beams is emitted by the group of N elementary transducers of the array and that the M beams are emitted successively, the total duration of the emission of the M beams being defined by the sum of the M maximum delay times of the M delay rules realising said M emitted focused beams.

**Patentansprüche**

1. Ultraschallechograph mit mindestens einer Reihe (10) von N Elementarwandlern (i) und außerdem mit einer Sendestufe (20) und einer Stufe (30) zum Empfangen und Verarbeiten von Echographiesignalen, die zu der genannten Reihe (10) zurückgeworfen sind, wobei diese Empfangs- und Verarbeitungsstufe (30) Mittel (31, 32, 33) aufweist zum gleichzeitigen Fokussieren von M Ultraschallstrahlenbündeln, die aus M verschiedenen Richtungen kommen, und wobei die genannte Sendestufe (20) Mittel (21, 22, 23) aufweist zum Fokussieren von M Ultraschallbündeln in je einer der genannten M verschiedenen Richtungen, dadurch gekennzeichnet, daß jedes der M Ultraschallbündel durch das Gebilde der N Elementarwandler der Reihe ausgestrahlt wird und die M Bündel nacheinander ausgestrahlt werden, wobei die Gesamtdauer der Ausstrahlung der M Bündel durch die Summe der M maximalen Verzögerungszeiten der M Verzögerungsgesetze definiert wird, wodurch die genannten M fokussierten, ausgestrahlten Strahlenbündel gebildet werden.

FIG.1

FIG.2

5

FIG.3